Europäisches Patentamt

European Patent Office

Office européen des brevets

(11) Veröffentlichungsnummer: **0 293 475**
**A1**

## (12) EUROPÄISCHE PATENTANMELDUNG

Veröffentlicht nach Art. 158 Abs. 3 EPÜ

(21) Anmeldenummer: 87901270.6

(22) Anmeldetag: **19.12.86**

Daten der zugrundeliegenden internationalen Anmeldung:

(86) Internationale Anmeldenummer:
PCT/SU86/00140

(87) Internationale Veröffentlichungsnummer:
WO88/04522 (30.06.88 88/14)

(51) Int. Cl.³: **A 01 J 7/00**

(43) Veröffentlichungstag der Anmeldung:
**07.12.88 Patentblatt 88/49**

(84) Benannte Vertragsstaaten:
**AT BE CH DE FR GB IT LI NL SE**

(71) Anmelder: RYAZANSKY RADIOTEKHNICHESKY
INSTITUT
ul. Gagarina, 59/1
Ryazan, 390024(SU)

(72) Erfinder: VEZENOV, Vitaly Ivanovich
ul. Gagarina, 44-29
Ryazan, 390005(SU)

(72) Erfinder: GRISHIN, Ivan Ivanovich
ul. Dzerzhinskogo, 74/7-10
Ryazan, 390005(SU)

(72) Erfinder: KRESTOV, Petr Anatolievich
Pervomaisky pr. 60-63
Ryazan, 390013(SU)

(72) Erfinder: KORZHEV, Vladimir Alexandrovich
Kasimovskoe shosse, 54-1-105
Ryazan, 390048(SU)

(72) Erfinder: MISHIN, Jury Leonidovich
ploschad Kostjushko, 3-14
Ryazan, 390000(SU)

(72) Erfinder: MASLENNIKOV, Vladimir Sergeevich
ul. Lva Tolstogo, 12a-1
Ryazan, 390008(SU)

(72) Erfinder: SVETNIKOV, Oleg Grigorievich
ul. Bratislavskaya, 6/1-20
Ryazan, 390008(SU)

(72) Erfinder: SUDAKOV, Nikolai Nikolaevich
ul. Pushkina, 42-48
Ryazan, 390005(SU)

(72) Erfinder: IGUMENTSEV, Vitaly Fedorovich
ul. Oktyabrskaya, 45-28
Ryazan, 390010(SU)

(74) Vertreter: Ebbinghaus, Dieter et al,
Patentanwälte v. Füner, Ebbinghaus, Finck Mariahilfplatz
2 & 3
D-8000 München 90(DE)

(54) MELKMASCHINE.

(57) A milking apparatus comprises milking sleeves (1) with electrodes (2), rods (4), a collector (3) connected through hoses (4) with the milking sleeves (1), a high-frequency generator (7) and a distributing synchronizing device (8). The input of the distributing synchronizing device (8) is electrically connected through a cable (9) to the high-frequency generator (7). The outputs of the distributing synchronizing device (8) are connected to the electrodes (2) of the milking sleeves (1).

./...

FIG.1

# MELKAPPARAT

## Gebiet der Technik

Die Erfindung bezieht sich auf Melkvorrichtungen und betrifft insbesondere einen Melkapparat.

## Bisheriger Stand der Technik

Es ist ein Melkapparat (SU-Urheberschein 677732, Klasse A01 J5/00, bekanntgemacht im Bulletin "Entdeckungen, Erfindungen, Gebrauchsmuster, Warenzeichen", H.29,1979) bekannt, der Melkbecher, einen Kollektor und Schläuche enthält, wobei die Melkbecher durch die Schläuche mit dem mit einer Melkkanne in Verbindung stehenden Kollektor verbunden sind. Dieser Melkapparat gestattet es nicht, bei den Tieren während des maschinellen Melkens die Behandlung und Vorbeugung der Mastitis durchzuführen.

Es ist eine Einrichtung zur Vorbeugung und Behandlung der Mastitis bei Tieren (SU-Urheberschein 914067, Klasse A61N, 1/06, A01 J 7/00, bekanntgemacht im Bulletin "Entdeckungen, Erfindungen, Gebrauchsmuster, Warenzeichen, H. 11, 1982) bekannt, die einen Hochfrequenzgenerator und an diesen angeschlossene Elektroden enthält.
Die Elektroden bestehen aus zwei koaxialen Zylinderringen, die durch eine stromleitende Platte verbunden sind.
Diese Einrichtung zur Vorbeugung und Behandlung der
Mastitis bei Tieren gestattet es nicht, eine hochfrequente Durchwärmung des gesamten Euters des Tieres durchzuführen, denn sie ist für eine Bestrahlung von zwei Vierteln des Euters vorgesehen, was die Wirksamkeit der Behandlung der Mastitis verringert. Bei Änderung der gegenseitigen Anordnung der Elektroden an den Verbindungsleitungen treten zusätzliche Energieverluste auf, was
gleichfalls zur Verringerung der Wirksamkeit der Behandlung
der Mastitis beiträgt. Die vorliegende Einrichtung zur
Vorbeugung und Behandlung der Mastitis bei Tieren hat
eine niedrige Betriebszuverlässigkeit, weil der Hochfrequenzgenerator zu dessen Einsatz in Viehställen und auf
Weiden nicht geeignet ist.

Es ist ein Melkapparat (SU-Urheberschein 519171, Klasse
A01 J 7/00, bekanntgemacht im Bulletin "Entdeckungen, Erfindungen,
Gebrauchsmuster, Warenzeichen" H. 24, 1976) bekannt,
der Melkbecher mit Elektroden, Schläuche, einen durch
die Schläuche mit den Melkbechern verbundenen Kollektor
und einen mit den Elektroden gekoppelten Hochfrequenzgenerator aufweist. Der bekannte Melkapparat erlaubt es
nicht, alle Viertel des Euters eines Tieres mit einem
elektromagnetischen Hochfrequenzfeld gleichzeitig zu bestrahlen. Bei der Behandlung jedes Tieres bedarf es einer Einstellung des Hochfrequenzgenerators. Die Einstellung des Hochfrequenzgenerators hängt ab von verschiedenen
Faktoren, beispielsweise von der Länge und der gegenseitigen Anordnung der Leitungen, über die die Energie des

- 3 -

Hochfrequenzfeldes den Elektroden zugeführt wird. Eine
beliebige Änderung der gegenseitigen Anordnung der Leitungen oder ihrer Anordnung in Bezug auf umgebende Gegenstände, darunter auch auf die Bedienungsperson,
führt zu einer Verminderung der zu übertragenen Hochfrequenzenergie oder zu einer Störung der Arbeit des
Hochfrequenzgenerators. Der bekannte Melkapparat weist
eine niedrige Betriebszuverlässigkeit auf, weil sein
Hochfrequenzgenerator zum Einsatz in Viehställen und
auf Weiden nicht geeignet ist. Der genannte Melkapparat besitzt also eine niedrige Wirksamkeit der Behandlung und Vorbeugung der Mastitis bei Tieren und eine
niedrige Betriebssicherheit.

Offenbarung der Erfindung

Der Erfindung liegt die Aufgabe zugrunde, einen Melkapparat zu schaffen, dessen Konstruktion es gestattet, die
Energie des Hochfrequenzgenerators dem Euter eines Tieres unter minimalen Verlusten zuzuführen und über das
Euter des Tieres gleichmäßig zu verteilen, was beim maschinellen Melken eine Erhöhung der Wirksamkeit der Behandlung und Vorbeugung der Mastitis bei Tieren sowie
eine Erhöhung der Betriebszuverlässigkeit des Melkapparates zur Folge hat.

Die gestellte Aufgabe wird dadurch gelöst, daß in dem
Melkapparat, der Melkbecher mit Elektroden, Schläuche,
einen durch die Schläuche mit den Melkbechern verbundenen Kollektor und einen Hochfrequenzgenerator enthält,
gemäß der Erfindung eine Verteiler-Anpassungseinrichtung
enthalten ist, deren Eingang über ein Kabel mit dem
Hochfrequenzgenerator elektrisch verbunden ist und deren
Ausgänge mit den Elektroden der Melkbecher gekoppelt sind.

- 4 -

Es ist zweckmäßig, daß der Melkapparat einen mit dem
Kabel eine elektromagnetische Kopplung aufweisenden
Strahlungsdosisgeber, eine Einrichtung zur Aufrechterhaltung der Strahlungsdosis, eine Einrichtung zum
automatischen Ausschalten, deren Eingang mit dem ersten
Eingang der Einrichtung zur Aufrechterhaltung der Strahlungsdosis und mit dem ersten Ausgang des Strahlungsdosisgebers verbunden ist, dessen zweiter Ausgang mit
dem zweiten Eingang der Einrichtung zur Aufrechterhaltung der Strahlungsdosis verbunden ist, deren dritter Eingang mit dem Ausgang der Einrichtung zum automatischen Ausschalten gekoppelt ist, eine Zeitschaltuhr und eine stromvorgebende Einrichtung enthält, deren
Eingang mit dem Ausgang der Einrichtung zur Aufrechterhaltung der Strahlungsdosis und deren Ausgang mit
dem ersten Eingang des Hochfrequenzgenerators gekoppelt
ist, dessen zweiter Eingang an den vierten Eingang der
Einrichtung zur Aufrechterhaltung der Dosis und an den
Ausgang der Zeitschaltuhr angeschlossen ist.

Es ist auch zweckmäßig, daß die Verteiler-Anpassungseinrichtung einen Transformator, einen ersten und einen
zweiten Kondensator enthält, wobei das erste Ende einer
Wicklung den Eingang der Verteiler-Anpassungseinrichtung
bildet und das zweite Ende dieser Wicklung mit dem ersten
Anschluß des ersten Kondensators, das erste Ende der anderen Transformatorwicklung mit der gemeinsamen Schiene,
das zweite Ende dieser anderen Transformatorwicklung
mit dem ersten Anschluß des zweiten Kondensators verbunden ist, dessen zweiter Anschluß mit dem zweiten Anschluß
des ersten Kondensators und mit der gemeinsamen Schiene
gekoppelt ist, eine erste und eine zweite Induktivität aufweist, wobei
die ersten Anschlüsse derselben mit den ersten Anschlüssen des ersten bzw. zweiten Kondensators gekoppelt sind und einen dritten Kondensator enthält,
dessen erster Anschluß mit dem zweiten Anschluß der
ersten Induktivität verbunden ist und einen Ausgang
der Verteiler-Anpassungseinrichtung bildet und dessen
zweiter Anschluß an den zweiten Anschluß der zweiten
Induktivität angelegt ist und als anderer Ausgang der
Verteiler-Anpassungseinrichtung dient.

Es ist vorzuziehen, daß die Verteiler-Anpassungseinrichtung des Melkapparates einen Transformator sowie
eine erste und eine zweite Induktivität enthält, wobei das erste Ende einer Transformatorwicklung als
Eingang der Verteiler-Anpassungseinrichtung dient,
das zweite Ende dieser einen Transformatorwicklung
mit dem ersten Anschluß der ersten Induktivität, das
erste Ende der anderen Transformatorwicklung mit der
gemeinsamen Schiene, das zweite Ende dieser Transformatorwicklung mit dem ersten Anschluß der zweiten Induktivität verbunden ist, einen Kondensator aufweist,
dessen erster Anschluß mit dem zweiten Anschluß der
ersten Induktivität gekoppelt ist und einen Ausgang
der Verteiler-Anpassungseinrichtung bildet, während
dessen zweiter Anschluß an den zweiten Anschluß der
zweiten Induktivität gelegt ist und den anderen Ausgang der Verteiler-Anpassungseinrichtung darstellt.

Erwünscht ist, daß die Verteiler-Anpassungseinrichtung
am Kollektor angeordnet ist.

Es wird bevorzugt, daß die Einrichtung zur Aufrechterhaltung der Strahlungsdosis einen Operationsverstärker, einen ersten und einen zweiten Widerstand enthält, wobei der erste Anschluß des ersten Widerstandes als erster Eingang der Einrichtung zur Aufrechterhaltung der Strahlungsdosis dient und dessen zweiter Anschluß mit dem invertierenden Eingang des Operationsverstärkers und mit dem ersten Anschluß des zweiten Widerstandes verbunden ist, der zweite Anschluß des zweiten Widerstandes mit dem Ausgang des Operationsverstärkers gekoppelt ist, einen dritten und einen vierten Widerstand aufweist, wobei der erste Anschluß des dritten Widerstandes als zweiter Eingang der Einrichtung zur Aufrechterhaltung der Dosis dient und der zweite Anschluß des dritten Widerstandes an den nicht invertierenden Eingang des Operationsverstärkers gelegt und mit dem ersten Anschluß des vierten Widerstandes gekoppelt ist, einen fünften und einen sechsten Widerstand enthält, deren erste Anschlüsse in entsprechender Weise zusammengeschaltet und mit dem zweiten Anschluß des vierten Widerstandes verbunden sind, wobei der zweite Anschluß des fünften Widerstandes mit der gemeinsamen Schiene gekoppelt und der zweite Anschluß des sechsten Widerstandes an den Anschluß einer Speisequelle gelegt ist, einen siebenten Widerstand und einen Transistor aufweist, dessen Basis an den Ausgang des Operationsverstärkers angeschlossen ist, dessen Kollektor den Ausgang der Einrichtung zur Aufrechterhaltung der Strahlungsdosis bildet und dessen Emitter mit dem ersten Anschluß des siebenten Widerstandes verbunden ist, dessen zweiter Anschluß mit der gemeinsamen Schiene gekoppelt ist, einen achten und einen neunten Widerstand, einen Thyristor enthält, wobei der erste Anschluß des achten Widerstandes mit dem Kollektor des Transistors und der zweite Anschluß des achten Widerstandes mit dem ersten Anschluß des neunten Widerstandes und mit der Anode des Thyristors verbunden ist, der zweite Anschluß des neunten Widerstandes als dritter Eingang der Einrichtung zur Aufrechterhaltung der
Strahlungsdosis fungiert, die Kathode des Thyristors
mit der gemeinsamen Schiene gekoppelt ist und die
Steuerelektrode des Thyristors als vierter Eingang der
Einrichtung zur Aufrechterhaltung der Strahlungsdosis
wirkt.

Der erfindungsgemäße Melkapparat gestattet es, die Wirksamkeit der Behandlung der Mastitis bei Tieren durch
Ermöglichung der Behandlung des gesamten Euters eines
Tieres, durch erhebliche Verkürzung der Behandlungsdauer und durch Ermöglichung der Vorgabe mehrerer Behandlungsarten mit verschiedenen Zeitintervallen und
Intensitäten eines Hochfrequenzfeldes zu erhöhen.

Die Erfindung erlaubt es auch, die Betriebszuverlässigkeit des Melkapparates zu erhöhen. Der Melkapparat ist
einfach im Betrieb, benötigt keine Nachstellung und ermöglicht eine automatische Aufrechterhaltung der eingestellten Heildosis. Die Behandlung kann eine beliebige Person auf Anweisung eines Veterinärs vornehmen.
Der Melkapparat enthält keine Energiequellen, die den
Melker oder die Tiere gefährden. Die Verwendung des
Melkapparates im Behandlungsgang verschlechtert die
Milchgüte nicht.

Kurze Beschreibung der Zeichnungen
Die Erfindung soll nachstehend an einem konkreten Ausführungsbeispiel unter Bezugnahme auf die beigelegten
Zeichnungen näher erläutert werden. Es zeigt:

Fig. 1 einen erfindungsgemäßen Melkapparat;

Fig. 2    ein Blockschaltbild des elektrischen Teiles
          des erfindungsgemäßen Melkapparates;

Fig. 3    ein Blockschaltbild eines erfindungsgemäßen
          Hochfrequenzgenerators;

Fig. 4    ein Schaltbild einer erfindungsgemäßen Vertei-
          ler-Anpassungseinrichtung mit einem Parallel-
          kreis;

Fig. 5    ein Schaltbild einer erfindungsgemäßen Verteiler-Anpassungseinrichtung mit einem Reihenkreis;

Fig. 6    ein Schaltbild einer erfindungsgemäßen Ein-
          richtung zur Aufrechterhaltung der Strahlungs-
          dosis.

          Bevorzugte Ausführungsform der Erfindung

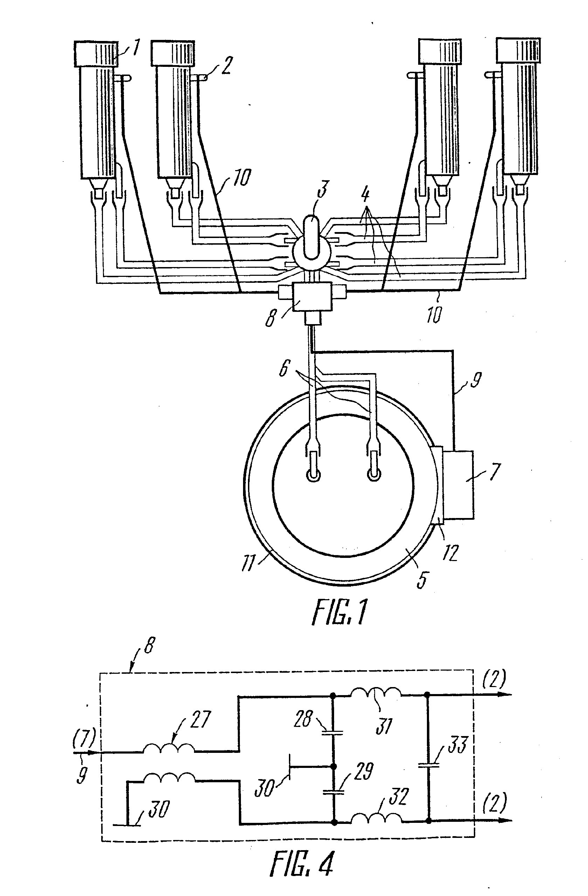

Der Melkapparat enthält Melkbecher 1 (Fig. 1) mit Elektroden 2, einen durch Schläuche 4 mit den Melkbechern 1
verbundenen Kollektor 3 und eine Melkkanne 5, die mit
dem Kollektor 3 mit Hilfe von biegsamen Schläuchen 6
kommuniziert. Der Melkapparat weist auch einen Hochfrequenzgenerator 7 und eine Verteiler-Anpassungseinrichtung 8 auf. Der Eingang der Verteiler-Anpassungseinrichtung 8 ist elektrisch durch ein Kabel 9 mit dem
Ausgang des Hochfrequenzgenerators 7 verbunden, während
die Ausgänge der Verteiler-Anpassungseinrichtung 8 durch
Leitungen 10 mit den Elektroden 2 der Melkbecher 1 gekoppelt sind. Die Verteiler-Anpassungseinrichtung 8
kann an einem beliebigen Ort angeordnet werden. Am
zweckmäßigsten ist es aber, diese derart anzuordnen, daß
die Länge der Leitungen 10 minimal ist. Beispielsweise
kann die Verteiler-Anpassungseinrichtung 8 am Kollektor 3 angeordnet werden, was zu einer Verringerung der Verluste der an das Euter eines Tieres zu übertragenden Energie und folglich auch zu einer Erhöhung der Wirksamkeit der Behandlung und Vorbeugung der Mastitis bei den Tieren und zu einer Erhöhung der Betriebszuverlässigkeit des Melkapparates führt. Der Hochfrequenzgenerator 7 wird an der Melkkanne 5 mittels biegsamer Riemen 11 befestigt und ist konstruktiv an einem Kühlkörper 12 montiert. Um die Wärmeabführung vom Hochfrequenzgenerator 7 zu verbessern, ahmt die Außenfläche der Grundplatte des Kühlkörpers 12 das Profil der Außenfläche der Melkkanne 5 nach.

Der Melkapparat enthält auch einen Strahlungsdosisgeber 13 (Fig. 2), eine Einrichtung 14 zur Aufrechterhaltung der Strahlungsdosis und einen automatischen Ausschalter 15. Der Eingang des automatischen Ausschalters 15 ist mit einem Eingang 16 der Einrichtung 14 zur Aufrechterhaltung der Strahlungsdosis und mit dem ersten Ausgang des Strahlungsdosisgebers 13 verbunden, dessen zweiter Ausgang mit einem Eingang 17 der Einrichtung 14 zur Aufrechterhaltung der Strahlungsdosis gekoppelt ist. Ein Eingang 18 der Einrichtung 14 zur Aufrechterhaltung der Strahlungsdosis ist mit dem Ausgang des automatischen Ausschalters 15 verbunden. Außerdem weist der Melkapparat eine Zeitschaltuhr 19 und eine stromvorgebende Einrichtung 20 auf, deren Eingang mit dem Ausgang der Einrichtung 14 zur Aufrechterhaltung der Strahlungsdosis und deren Ausgang mit dem ersten Eingang des Hochfrequenzgenerators 7 verbunden ist, dessen zweiter Eingang an einen Eingang 21 der Einrichtung 14 zur Aufrechterhaltung der Strahlungsdosis und an den Ausgang der Zeitschaltuhr 19 angeschlossen ist.

In Fig. 2 ist durch eine gestrichelte Linie 22 eine elektromagnetische Kopplung des Strahlungsdosisgebers 13 mit dem Kabel 9 angedeutet, das die Verteiler-Anpassungseinrichtung 8 mit dem Hochfrequenzgenerator 7 elektrisch verbindet. Der Strahlungsdosisgeber 13 kann in bekannter Schaltung ("Upravlenie, Peredacha, preobrazovanie i otobrazhenie informatsii", mezhvuzovsky sbornik statei, vypusk 1" ("Steuerung, Übertragung, Umwandlung und Abbildung von Informationen", Hochschulen-Sammelband von Beiträgen, Heft 1), herausgegeben 1974 (Ryazan), V.V. Martynkin, N.P. Martynenko, A. Oskolkov, I.A. Romanov, J.N. Sudakov, A.D. Fetisov "Effektivnaya skhema zaschity moschnogo mnogomodulnogo vykhodnogo kaskada tranzistornogo radioperedajuschego ustroistva" ("Wirksame Schutzschaltung für eine leistungsstarke Mehrmodul-Ausgangsstufe einer transistorisierten Sendeeinrichtung"), S. 151) realisiert werden. Der automatische Ausschalter 15 kann in bekannter Schaltung (J. Rutkovsky "Integralnye operatsionnye usiliteli" ("Integrierte Operationsverstärker"), veröffentlicht 1978, Verlag "Mir" (Moskau), S. 213) realisiert werden. Die stromvorgebende Einrichtung 20 kann in bekannter Schaltung (U. Tittse, K. Shenk "Poluprovodnikovaya skhemotekhnika" ("Halbleiter-Schaltungstechnik"), veröffentlicht 1982, Verlag "Mir" (Moskau), S. 41) realisiert werden.

Der Hochfrequenzgenerator 7 (Fig. 3) enthält einen eigenerregten Generator 23 und einen Vorverstärker 24. Der erste Eingang des eigenerregten Generators 23 tritt als erster Eingang des Hochfrequenzgenerators 7 auf. Der zweite Eingang des eigenerregten Generators 23 ist mit dem ersten Eingang des Vorverstärkers 24 verbunden und wirkt als zweiter Eingang des Hochfrequenzgenerators 7. Der Ausgang des eigenerregten Generators 23
ist mit dem zweiten Eingang des Vorverstärkers 24 gekoppelt. Der Hochfrequenzgenerator 7 enthält auch einen Leistungsverstärker 25 und ein Bandfilter 26, dessen
Ausgang als Ausgang des Hochfrequenzgenerators 7 dient
und dessen Eingang mit dem Ausgang des Leistungsverstärkers 25 verbunden ist, dessen Eingang an den Ausgang des Vorverstärkers 24 angeschlossen ist. Der eigenerregte Generator 23 kann in bekannter Schaltung
(U. Titse, K. Shenk "Poluprovodnikovaya skhemotekhnika",
veröffentlicht 1982, Verlag "Mir" (Moskau), S. 300)
realisiert werden.

Fig. 4 zeigt ein Schaltbild der Verteiler-Anpassungseinrichtung 8. Die Verteiler-Anpassungseinrichtung 8
weist einen Transformator 27 und Kondensatoren 28, 29
auf, wobei das erste Ende einer Wicklung des Transformators 27 als Eingang der Verteiler-Anpassungseinrichtung 8 dient. Das zweite Ende dieser Wicklung des Transformators 27 ist mit dem ersten Anschluß des Kondensators 28 verbunden. Das erste Ende der anderen Wicklung
des Transformators 27 ist mit der gemeinsamen Schiene 30
gekoppelt.

Das zweite Ende dieser Wicklung des Transformators 27
ist mit dem ersten Anschluß des Kondensators 29 verbunden, dessen zweiter Anschluß mit dem zweiten Anschluß
des Kondensators 28 und mit der gemeinsamen Schiene 30
in Verbindung steht. Die Verteiler-Anpassungseinrichtung 8 enthält ferner Induktivitäten 31, 32, wobei die
ersten Anschlüsse der Induktivitäten 31, 32 mit den
ersten Anschlüssen der Kondensatoren 28, bzw. 29 ver-

- 12 -

bunden sind. Die Verteiler-Anpassungseinrichtung 8
weist weiter einen Kondensator 33 auf, dessen erster
Anschluß mit dem zweiten Anschluß der Induktivität 31
verbunden ist und als erster Ausgang der Verteiler-
Anpassungseinrichtung 8 wirkt, während der zweite Anschluß des Kondensators 33 an den zweiten Anschluß der
Induktivität 32 gelegt ist und als zweiter Ausgang
der Verteiler-Anpassungseinrichtung 8 dient.

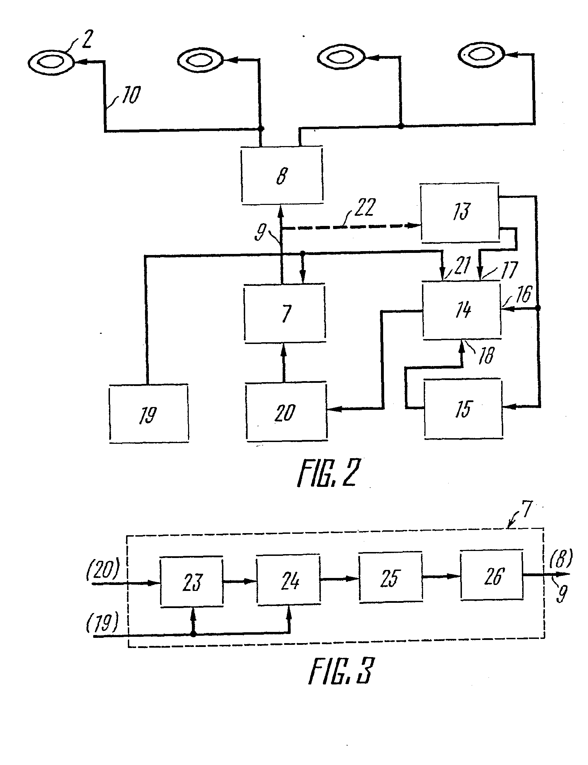

In Fig. 5 ist ein Schaltbild der Verteiler-Anpassungseinrichtung 8 dargestellt, die einen Transformator 34
und Induktivitäten 35, 36 enthält. Das erste Ende einer
Wicklung des Transformators 34 wirkt als Eingang der
Verteiler-Anpassungseinrichtung 8, das zweite Ende dieser Wicklung ist mit dem ersten Anschluß der Induktivität 35 gekoppelt. Das erste Ende der anderen Wicklung
des Transformators 34 ist an die gemeinsame Schiene 30
gelegt, das zweite Ende dieser Wicklung ist mit dem
ersten Anschluß der Induktivität 36 verbunden. Außerdem weist die Verteiler-Anpassungseinrichtung 8 einen
Kondensator 37 auf. Der erste Anschluß des Kondensators
37 ist mit dem zweiten Anschluß der Induktivität 35
verbunden und stellt einen ersten Ausgang der Verteiler-
Anpassungseinrichtung 8 dar, während der zweite Anschluß
des Kondensators 37 an den zweiten Anschluß der Induktivität 36 angeschlossen ist und den zweiten Ausgang
der Verteiler-Anpassungseinrichtung 8 darstellt.

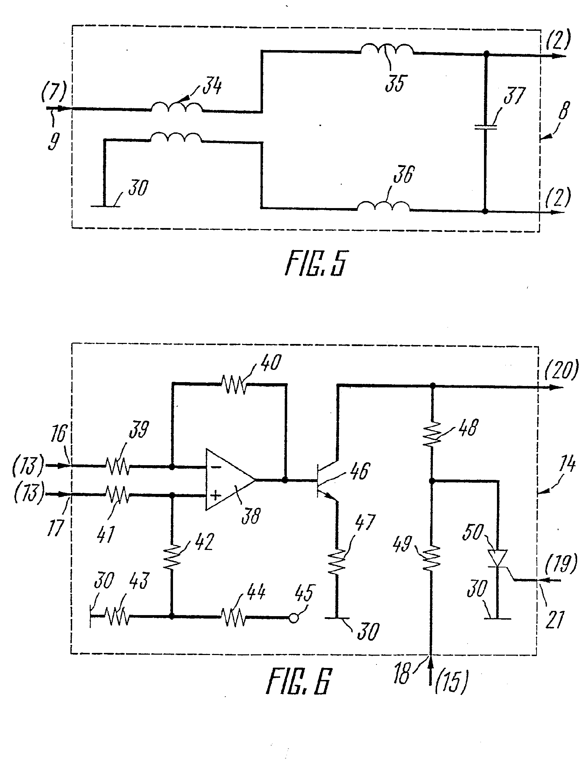

In Fig. 6 ist ein Prinzipschaltbild der Einrichtung 14
zur Aufrechterhaltung der Strahlungsdosis wiedergegeben.
Die Einrichtung 14 zur Aufrechterhaltung der Strahlungsdosis enthält einen Operationsverstärker 38 und Widerstände 39, 40. Der erste Anschluß des Widerstandes 39
bildet den Eingang 16 der Einrichtung 14 zur Aufrechterhaltung der Strahlungsdosis, während der zweite Anschluß des Widerstandes 39 mit dem invertierenden Eingang des Operationsverstärkers 38 und mit dem ersten
Anschluß des Widerstandes 40 verbunden ist, dessen
zweiter Anschluß mit dem Ausgang des Operationsverstärkers 38 verbunden ist. Die Einrichtung 14 zur Aufrechterhaltung der Strahlungsdosis enthält ferner Widerstände 41, 42. Ein Anschluß des Widerstandes 41
wirkt als Eingang 17 der Einrichtung 14 zur Aufrechterhaltung der Strahlungsdosis und dessen anderer Anschluß ist an den nicht invertierenden Eingang des
Operationsverstärkers 38 gelegt und mit einem Anschluß
des Widerstandes 42 verbunden. Die Einrichtung 14
zur Aufrechterhaltung der Strahlungsdosis weist auch
Widerstände 43, 44 auf. Die ersten Anschlüsse der Widerstände 43, 44 sind zusammengeschaltet und mit dem
anderen Anschluß des Widerstandes 42 verbunden. Der
zweite Anschluß des Widerstandes 43 ist mit der gemeinsamen Schiene 30 verbunden und der zweite Anschluß des Widerstandes 44 an einen Anschluß 45 einer
nicht dargestellten Speisequelle angeschlossen. Die
Einrichtung 14 zur Aufrechterhaltung der Strahlungsdosis weist ferner einen Transistor 46, Widerstände
47, 48, 49 und einen Thyristor 50 auf. Die Basis des
Transistors 46 ist an den Ausgang des Operationsverstärkers 38 angeschlossen und sein Emitter mit einem
Anschluß des Widerstandes 47 verbunden, dessen anderer
Anschluß mit der gemeinsamen Schiene 30 verbunden ist.
Der Kollektor des Transistors 46 dient als Ausgang der
Einrichtung 14 zur Aufrechterhaltung der Strahlungsdosis. Der erste Anschluß des Widerstandes 48 ist mit
dem Kollektor des Transistors 46 und der zweite Anschluß des Widerstandes 48 mit dem ersten Anschluß des

- 14 -

Widerstandes 49 und mit der Anode des Thyristors 50 verbunden. Der zweite Anschluß des Widerstandes 49 bildet den Eingang 18 der Einrichtung 14 zur Aufrechterhaltung der Strahlungsdosis. Die Kathode des Thyristors 50 ist mit der gemeinsamen Schiene 30 gekoppelt, während die Steuerelektrode des Thyristors 50 als Eingang 21 der Einrichtung 14 zur Aufrechterhaltung der Strahlungsdosis dient.

Der während des maschinellen Melkens der Tiere auch die Funktionen der Behandlung und Vorbeugung der Mastitis erfüllende Melkapparat arbeitet wie folgt. Vor dem Melken werden abhängig vom Grad der Erkrankung des Tieres an der Mastitis die erforderliche Dauer der Behandlungsseance und Strahlungsdosis festgestellt. Die Melkbecher 1 (Fig. 1) mit den eingebauten Elektroden 2 werden auf die Zitzen des Euters des Tieres aufgesetzt, wie dies durch den technologischen Prozess des maschinellen Melkens vorgesehen ist, und es beginnt der Melkvorgang.

Gleichzeitig wird die elektrische Versorgung des Hochfrequenzgenerators 7 eingeschaltet. Die Hochfrequenzenergie vom Hochfrequenzgenerator 7 wird über das Kabel 9 auf den Eingang der Verteiler-Anpassungseinrichtung 8 geliefert, die am Kollektor 3 in unmittelbarer Nähe der Elektroden 2 der Melkbecher 1 angeordnet ist. Von den Ausgängen der Verteiler-Anpassungseinrichtung 8 wird die Hochfrequenzenergie den Elektroden 2 zugeführt. Hierbei liegen die Hochfrequenzspannungen an den Ausgängen der Verteiler-Anpassungseinrichtung 8 in Gegenphase, was es gestattet, zwischen den Elektroden 2 jedes Paares der Melkbecher 1 ein Hochfrequenzfeld zu erzeugen, dessen Energie durch die Zitzen und das Euter des Tieres aufgenommen wird. Diese Wirkung des Hochfrequenzfeldes bewirkt eine Durchwärmung des Euters, wodurch die Heilwirkung erzielt und die Milcherzeugung gefördert wird. Das Euter des Tieres stellt eine komplexe Belastung für den Hochfrequenzgenerator 7 dar, die mit Hilfe der Verteiler-Anpassungseinrichtung 8 in einen Wert umgewandelt wird, der nahe dem Wellenwiderstand des Kabels 9 liegt. Hierbei wird im Kabel ein Wanderwellenbetrieb sichergestellt. Beim Melken bleibt aber die Belastung des Hochfrequenzgenerators 7 wegen der Unterdruckpulsationen in den Schläuchen 4, 6, der Änderungen der Größe des Euters und der individuellen Besonderheiten der Tiere nicht konstant, was zum Auftreten einer reflektierten Welle im Kabel 9 und zur Änderung der in die Belastung einzuspeisenden Energie führt. Auf diese Leistungsänderung reagiert der Strahlungsdosisgeber 13 (Fig. 2). An einem Ausgang des Strahlungsdosisgebers 13 wird eine der Größe der einfallenden Welle der Hochfrequenzenergie im Kabel 9 proportionale Spannung und am anderen Ausgang des Strahlungsdosisgebers 13 eine der Größe der reflektierten Welle der Hochfrequenzenergie proportionale Spannung erzeugt.

Die Spannung von den Ausgängen des Strahlungsdosisgebers 13 gelangt auf die Eingänge 16 bzw. 17 der Einrichtung 14 zur Aufrechterhaltung der Strahlungsdosis. Am Ausgang der Einrichtung 14 zur Aufrechterhaltung der Strahlungsdosis wird eine der in die Belastung einzuspeisenden Energie proportionale Spannung erzeugt, die dem Eingang der stromvorgebenden Einrichtung 20 zugeführt wird. Die stromvorgebende Einrichtung 20 steuert die Betriebsarten des Hochfrequenzgenerators 7 in Abhängigkeit vom Wert der Spannung am Eingang der stromvorgebenden Einrichtung 20. Am Ausgang des Hochfrequenzgenerators 7 ändert sich die Leistung und wird mittels
der Verteiler-Anpassungseinrichtung 8 der Belastung zugeführt. Auf solche Weise wird die Leistung in der Belastung auf dem Sollpegel gehalten. Dies macht es möglich, die Wirksamkeit der Behandlung und Vorbeugung
der Mastitis während des maschinellen Melkens durch
Übertragung der Energie vom Hochfrequenzgenerator 7
zum Euter des Tieres unter minimalen Verlusten und
gleichmäßiger Verteilung über das Euter des Tieres zu
erhöhen.

Während der Behandlung können die Melkbecher 1 (Fig. 1)
vom Euter des Tieres abfallen oder abgenommen werden,
bevor die Behandlung zu Ende ist. In diesem Fall tritt
eine beträchtliche Änderung der Belastung ein, was eine Verletzung der Bedingung der Anpassung des Hochfrequenzgenerators 7 an die Belastung und einen sprunghaften Anstieg der Größe der reflektierten Welle im Kabel 9 herbeiführt. Infolgedessen nimmt an einem Ausgang des Strahlungsdosisgebers 13 die der Größe der
reflektierten Welle proportionale Spannung erheblich zu.
Diese Spannung gelangt auf den Eingang der Einrichtung
15 zur automatischen Ausschaltung und löst sie aus. Das
Steuersignal vom Ausgang der Einrichtung 15 zur automatischen Ausschaltung trifft am Eingang 18 der Einrichtung 14 zur Aufrechterhaltung der Strahlungsdosis ein
und schaltet sie ab. Dies führt zur Einstellung der Arbeit der stromvorgebenden Einrichtung 20 und des Hochfrequenzgenerators 7. Dadurch wird der Ausfall des
Hochfrequenzgenerators 7 verhindert, was es gestattet,
die Betriebszuverlässigkeit des Melkapparates zu erhöhen.

- 17 -

Die Dauer der Behandlung wird durch die Zeitschaltuhr 19 festgelegt. Nach Ablauf der Sollzeit unterbricht die Zeitschaltuhr 19 die elektrische Versorgung des Hochfrequenzgenerators 7 und der Einrichtung 14 zur Aufrechterhaltung der Strahlungsdosis.

Der in Fig. 3 dargestellte Hochfrequenzgenerator 7 arbeitet folgendermaßen. Der eigenerregte Generator 23 erzeugt Hochfrequenzschwingungen, die dem Eingang des Vorverstärkers 24 zugeführt, durch diesen verstärkt und an den Eingang des Leistungsverstärkers 25 übertragen werden. Hierbei sorgt der Leistungsverstärker 25 dafür, daß an seinem Ausgang die notwendige Hochfrequenz-Leistung zur Verfügung steht, die über das Bandfilter 26 an den Ausgang des Hochfrequenzgenerators 7 gelangt. Das Bandfilter 26 läßt die Schwingungen der Frequenzen des eigenerregten Generators 23 durch und unterdrückt Schwingungen anderer Frequenzen, die ein Nebenprodukt der nichtlinearen Betriebsart des eigenerregten Generators 23 und des Vorverstärkers 24 sowie des Leistungsverstärkers 25 sind. Die Leistung des Hochfrequenzgenerators 7 wird durch Änderung des Stroms am ersten Eingang des eigenerregten Generators 23 mit Hilfe der stromvorgebenden Einrichtung 20 geregelt. Die Einstellung des Hochfrequenzgenerators 7 nach Ablauf der Behandlung wird durch Abschalten der Speisespannung am eigenerregten Generator 23 und dem Vorverstärker 24 erreicht, die von der Zeitschaltuhr 19 am zweiten Eingang des Hochfrequenzgenerators 7 eingespeist wird.

Die in Fig. 4 wiedergegebene Verteiler-Anpassungseinrichtung 8 arbeitet wie folgt. Die an den Eingang der Verteiler-Anpassungseinrichtung 8 angelegte Spannung wird dem als Transformator vom Typ "lange Leitung" ausgeführten Symmetriertransformator 27 und von seinem Ausgang einem durch die Kondensatoren 28, 29, 33 und die Induktivität 31, 32 gebildeten Parallelkreis zugeleitet. Dann wird die Hochfrequenzspannung über den Parallelkreis den Ausgängen der Verteiler-Anpassungseinrichtung 8 zugeführt. Der Parallelkreis sorgt für eine Anpassung der an den Ausgängen der Verteiler-Anpassungseinrichtung 8 liegenden komplexen Last an den Wellenwiderstand des Transformators 27. Hierbei wird in dem an den Eingang der Verteiler-Anpassungseinrichtung 8 angeschlossenen Kabel 9 der Wanderwellenbetrieb eingestellt.

Die in Fig. 5 dargestellte Verteiler-Anpassungseinrichtung 8 arbeitet wie folgt. Die an den Eingang der Verteiler-Anpassungseinrichtung 8 angelegte Hochfrequenzspannung wird dem als Transformator vom Typ "lange Leitung" ausgebildeten Symmetriertransformator 34 und von seinem Ausgang einem durch die Induktivitäten 35, 36 und den Kondensator 37 gebildeten Reihenkreis zugeführt. Dann wird die Hochfrequenzspannung über den Reihenkreis den Ausgängen der Verteiler-Anpassungseinrichtung 8 zugeführt. Der Reihenkreis sorgt für eine Anpassung der an den Ausgängen der Verteiler-Anpassungseinrichtung 8 liegenden komplexen Last an den Wellenwiderstand des Transformators 34. Hierbei wird in dem an den Eingang der Verteiler-Anpassungseinrichtung 8 angeschlossenen Kabel 9 der Wanderwellenbetrieb eingestellt.

Die Einführung der gemäß Fig. 4 oder 5 ausgebildeten Verteiler-Anpassungseinrichtung 8 in den Melkapparat gestattet es also, die Wirksamkeit der Behandlung und
Vorbeugung der Mastitis bei Tieren und die Betriebszuverlässigkeit des Melkapparates zu erhöhen.

Die in Fig. 6 dargestellte Einrichtung 14 zur automatischen Aufrechterhaltung der Strahlungsdosis arbeitet
folgendermaßen. Die an den Eingang 16 der Einrichtung 14
zur automatischen Aufrechterhaltung der Strahlungsdosis
angelegte Spannung wird über den Widerstand 39 auf den
invertierenden Eingang des Operationsverstärkers 38 gegeben. Die an den Eingang 17 der Einrichtung 14 zur
automatischen Aufrechterhaltung der Strahlungsdosis angelegte Spannung wird über den Widerstand 41 auf den
nicht invertierenden Eingang des Operationsverstärkers 38
geliefert. Am Ausgang des Operationsverstärkers 38
addieren sich die verstärkten Spannungen. Die Anfangsspannung am Ausgang des Operationsverstärkers 38 wird
durch Anlegen der von einem aus den Widerständen 43 und
44 aufgebauten Teiler abgenommenen Spannung über den
Widerstand 42 an den nicht invertierenden Eingang des
Operationsverstärkers 38 vorgegeben. Der Verstärkungsfaktor des Operationsverstärkers 38 wird durch den Widerstand 40 vorgegeben.

Die Spannung vom Ausgang des Operationsverstärkers 38
wird an die Basis des Transistors 46 angelegt. Aus dem
Transistor 46 und den Widerständen 47, 48, 49 ist ein
Widerstandsverstärker aufgebaut. Die Widerstände 48,
49 stellen eine Kollektorbelastung des Transistors 46
dar, und über sie wird dem Kollektor des Transistors
46 vom Eingang 18 der Einrichtung 14 zur automatischen
Aufrechterhaltung der Strahlungsdosis eine Speisespannung zugeführt. Die durch den Widerstandsverstärker verstärkte Spannung wird auf den Ausgang der Einrichtung 14 zur automatischen Aufrechterhaltung der Strahlungsdosis geliefert. Der Widerstand 47 begrenzt den durch den Transistor 46 fließenden Strom. Der Thyristor 50 ist im Ausgangszustand gesperrt und hat keinen Einfluß auf die Arbeit der Einrichtung 14 zur automatischen Aufrechterhaltung der Strahlungsdosis. Bei Anlegen der Spannung an die als Eingang 21 der Einrichtung 14 zur automatischen Aufrechterhaltung der Strahlungsdosis dienende Steuerelektrode des Thyristors 50 wird dieser leitend und die Schaltung mit dem Widerstandsverstärker stromlos. Infolgedessen wird die Spannung am Ausgang der Einrichtung 14 zur automatischen Aufrechterhaltung der Strahlungsdosis gleich Null, was eine Sperrung der stromvorgebenden Einrichtung 20 und eine Einstellung der Arbeit des Hochfrequenzgenerators 7 veranlaßt.

Die Einführung der Einrichtung 14 zur automatischen Aufrechterhaltung der Strahlungsdosis in den Melkapparat gestattet es, den Vorgabewert der Leistung in der Belastung aufrechtzuerhalten und den Hochfrequenzgenerator 7 nach Ablauf der Behandlung oder nach der Abnahme der Melkbecher 1 abzuschalten.

Die vorliegende Erfindung erlaubt es also, die Wirksamkeit der Behandlung und Vorbeugung der Mastitis bei Tieren beim maschinellen Melken sowie die Betriebszuverlässigkeit des Melkapparates zu erhöhen.

Industrielle Anwendbarkeit

Die Erfindung kann in der Landwirtschaft zur Behandlung und Vorbeugung der Mastitis bei Tieren beim maschinellen Melken angewendet werden.

PATENTANSPRÜCHE

1. Melkapparat mit mit Elektroden (2) versehenen Melkbechern (1), Schläuchen (4), einem durch die Schläuche (4) mit den Melkbechern (1) verbundenen Kollektor
(3) und einem Hochfrequenzgenerator (7), g e k e n n -
z e i c h n e t durch eine Verteiler-Anpassungseinrichtung (8), deren Eingang über ein Kabel (9) mit dem
Hochfrequenzgenerator (7) elektrisch verbunden ist und
deren Ausgänge mit den Elektroden (2) der Melkbecher
(1) gekoppelt sind.

2. Melkapparat nach Anspruch 1, g e k e n n z e i c h-
n e t durch einen mit dem Kabel (9) eine elektromagnetische Kopplung aufweisenden Strahlungsdosisgeber (13),
eine Einrichtung (14) zur Aufrechterhaltung der Strahlungsdosis, eine Einrichtung (15) zum automatischen
Ausschalten, deren Eingang mit einem Eingang (16) der
Einrichtung (14) zur Aufrechterhaltung der Strahlungsdosis und mit dem ersten Ausgang des Strahlungsdosisgebers (13) verbunden ist, dessen zweiter Ausgang mit
einem Eingang (17) der Einrichtung (14) zur Aufrechterhaltung der Strahlungsdosis in Verbindung steht, während ein Eingang (18) der Einrichtung (14) zur Aufrechterhaltung der Strahlungsdosis mit dem Ausgang
der Einrichtung (15) zum automatischen Ausschalten
gekoppelt ist, eine Zeitschaltuhr (19) und eine stromvorgebende Einrichtung (20), deren Eingang mit dem
Ausgang der Einrichtung (14) zur Aufrechterhaltung der
Strahlungsdosis und deren Ausgang mit dem ersten Eingang des Hochfrequenzgenerators (7) gekoppelt ist, dessen zweiter Eingang an einen Eingang (21) der Einrichtung (14) zur Aufrechterhaltung der Strahlungsdosis und an den Ausgang der Zeitschaltuhr (19) angeschlossen ist.

3. Melkapparat nach Anspruch 1 oder 2, d a d u r c h  g e k e n n z e i c h n e t, daß die Verteiler-Anpassungseinrichtung (8) einen Transformator (27) und Kondensatoren (28, 29) enthält, wobei das erste Ende einer Wicklung des Transformators (27) als Eingang der Verteiler-Anpassungseinrichtung (8) dient, daß das zweite Ende dieser einen Wicklung des Transformators (27) mit dem ersten Anschluß des Kondensators (28), das erste Ende der anderen Wicklung des Transformators (27) mit der gemeinsamen Schiene (30) und das zweite Ende dieser anderen Wicklung des Transformators (27) mit dem ersten Anschluß des Kondensators (29) verbunden ist, dessen zweiter Anschluß mit dem zweiten Anschluß des Kondensators (28) und mit der gemeinsamen Schiene (30) verbunden ist, und Induktivitäten (31, 32) aufweist, deren erste Anschlüsse mit den ersten Anschlüssen der Kondensatoren (28 bzw. 29) gekoppelt sind, sowie einen Kondensator (33) enthält, dessen erster Anschluß mit dem zweiten Anschluß der Induktivität (31) verbunden ist und als erster Ausgang der Verteiler-Anpassungseinrichtung (8) wirkt und dessen zweiter Anschluß an den zweiten Anschluß der Induktivität (32) angelegt ist und als zweiter Ausgang der Verteiler-Anpassungseinrichtung (8) dient.

4. Melkapparat nach Anspruch 1 oder 2, d a d u r c h  g e k e n n z e i c h n e t, daß die Verteiler-Anpassungseinrichtung (8) einen Transformator (34) und Induktivitäten (35, 36) enthält, wobei das erste Ende einer Wicklung des Transformators (34) als Eingang der Verteiler-Anpassungseinrichtung (8) dient, das zweite Ende
dieser einen Wicklung des Transformators (34) mit dem
ersten Anschluß der Induktivität (35), das erste Ende
der anderen Wicklung des Transformators (34) mit der
gemeinsamen Schiene (30), das zweite Ende dieser anderen Wicklung des Transformators (34) mit dem ersten
Anschluß der Induktivität (36) verbunden ist und einen
Kondensator (37) aufweist, dessen erster Anschluß mit
dem zweiten Anschluß der Induktivität (35) gekoppelt
ist und als ein Ausgang der Verteiler-Anpassungseinrichtung (8) dient, während dessen zweiter Anschluß
an den zweiten Anschluß der Induktivität (36) gelegt
ist und als anderer Ausgang der Verteiler-Anpassungseinrichtung (8) dient.

5. Melkapparat nach Anspruch 1 oder 2, d a d u r c h
g e k e n n z e i c h n e t, daß die Verteiler-Anpassungseinrichtung (8) am Kollektor (3) angeordnet ist.

6. Melkapparat nach Anspruch 2, d a d u r c h  g e -
k e n n z e i c h n e t, daß die Einrichtung (14) zur
Aufrechterhaltung der Strahlungsdosis einen Operationsverstärker (38) und Widerstände (39, 40) enthält, wobei der erste Anschluß des Widerstandes (39) den Eingang (16) der Einrichtung (14) zur Aufrechterhaltung
der Strahlungsdosis bildet und dessen zweiter Anschluß
mit dem invertierenden Eingang des Operationsverstärkers
(38) und mit dem ersten Anschluß des Widerstandes (40)
verbunden ist, dessen zweiter Anschluß mit dem Ausgang
des Operationsverstärkers (38) gekoppelt ist, ferner
Widerstände (41, 42), wobei der erste Anschluß des Widerstandes (41) als Eingang (17) der Einrichtung (14)
zur Aufrechterhaltung der Strahlungsdosis dient und
dessen zweiter Anschluß an den nicht invertierenden Eingang des Operationsverstärkers (38) gelegt und mit
dem ersten Anschluß des Widerstandes (42) gekoppelt
ist, ferner Widerstände (43, 44), deren erste Anschlüsse zusammengeschaltet und mit dem zweiten Anschluß des Widerstandes (42) verbunden sind, wobei
der zweite Anschluß des Widerstandes (43) mit der
gemeinsamen Schiene (30) gekoppelt und der zweite Anschluß des Widerstandes (44) an den Anschluß einer
Speisequelle gelegt ist, sowie einen Widerstand (47)
und einen Transistor (46) aufweist, dessen Basis an
den Ausgang des Operationsverstärkers (38) angeschlossen ist, dessen Kollektor als Ausgang der Einrichtung
(14) zur Aufrechterhaltung der Strahlungsdosis dient
und dessen Emitter mit dem ersten Anschluß des Widerstandes (47) verbunden ist, dessen zweiter Anschluß
mit der gemeinsamen Schiene (30) in Verbindung steht,
ferner Widerstände (48, 49), einen Thyristor (50),
wobei der erste Anschluß des Widerstandes (48) mit dem
Kollektor des Transistors (46) und der zweite Anschluß
des Widerstandes (48) mit dem ersten Anschluß des Widerstandes (49) und mit der Anode des Thyristors (50)
verbunden ist, der zweite Anschluß des Widerstandes
(49) als Eingang (18) der Einrichtung (14) zur Aufrechterhaltung der Strahlungsdosis dient, die Kathode
des Thyristors (50) mit der gemeinsamen Schiene (30)
gekoppelt ist und die Steuerelektrode des Thyristors
(50) als Eingang (21) der Einrichtung (14) zur Aufrechterhaltung der Strahlungsdosis wirkt.

*1*

FIG. 1

FIG. 4

2

FIG. 2

FIG. 3

3

**FIG. 5**

**FIG. 6**

# INTERNATIONAL SEARCH REPORT

0293475

International Application No PCT/SU 86/00140

## I. CLASSIFICATION OF SUBJECT MATTER (if several classification symbols apply, indicate all) [6]

According to International Patent Classification (IPC) or to both National Classification and IPC

$IPC^4$ - A 01 J 7/00

## II. FIELDS SEARCHED

### Minimum Documentation Searched [7]

| Classification System | Classification Symbols |
|---|---|
| $IPC^4$ | A 01 J 7/00, A 61 N 1/06 , 5/00, 5/02, 5/04 |

### Documentation Searched other than Minimum Documentation to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 519171, (Vsesojuzny nauchno-issledovatelsky institut elektrifikatsü selskogo khozyaistva), 30 July 1976 (30.07.76) see figure 2 (referred to the description) | 1 |
| A | SU,A1, 914067, (Ryayansky selskokhozyai-stvenny institut im. prof. P.A. Kostycheva) 23 March 1982 (23.03.82), see figure 1 referred to in the description) | 1 |
| A | SU, A1, 950250 ,(Vsesojuzny nauchno-issledovatelsky institut elekrifikatsü sekskogo khozyaistva) 15 August 1982 (15.08.82) see figure 1,2 | 1,2 |
| A | SU, A1, 1113054, (Vsesojuzny nauchno-issledovatelsky institut elektrifikatsü selskogo khozyaistva), 15 September 1984 (15.09.84) see page 1 | 1 |
| A | SU, A1, 1117023, (Ryazansky radiotekhnichesky institut 07 October 1984(07.10.84) see page 1 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 28 July 1987(28.07.87) | 17 August 1987 (17.08.87) |
| International Searching Authority | Signature of Authorized Officer |
| ISA/SU | |

Form PCT/ISA/210 (second sheet) (January 1985)